# EUROPÄISCHE PATENTSCHRIFT

(11) **EP 3 957 868 B1**
(45) Veröffentlichungstag und Bekanntmachung des Hinweises auf die Patenterteilung: **31.07.2024**
(21) Anmeldenummer: 20191865.3
(22) Anmeldetag: 20.08.2020
(51) Int. Cl.: F15B 15/28, G01D 5/48, G01S 13/88, G01B 15/00, G01S 13/08, H01Q 1/22

(54) **KOLBEN-ZYLINDER-EINHEIT MIT KOLBENPOSITIONSERFASSUNGSEINHEIT UND KOLLIMATOR**
PISTON CYLINDER UNIT WITH PISTON POSITION SENSING UNIT AND COLLIMATOR
VÉRIN POURVU D'UNE UNITÉ DE DÉTECTION DE LA POSITION DU PISTON ET COLLIMATEUR

(43) Veröffentlichungstag der Anmeldung: 23.02.2022
(73) Patentinhaber: Pacoma GmbH, 37269 Eschwege (DE)
(72) Erfinder: Herwig, Karl-Wilhelm, 37214 Witzenhausen (DE); Pik, Alexander, 37269 Eschwege (DE); Leicht, Günter, 96135 Stegaurach (DE)
(74) Vertreter: Kraus & Lederer PartGmbB

(56) Entgegenhaltungen:
- EP-A1- 2 966 725
- EP-A1- 3 667 813
- DE-B3- 102016 120 665

## Beschreibung

### TECHNISCHES GEBIET DER ERFINDUNG

Die Erfindung betrifft eine Kolben-Zylinder-Einheit mit einem Zylinder, einem in dem Zylinder axial beweglich gelagerten Kolben und einer Kolbenpositionserfassungseinheit, die die axiale Position des Kolbens in dem Zylinder erfasst.

Derartige Kolben-Zylinder-Einheiten werden insbesondere in Arbeitsmaschinen, Baumaschinen, landwirtschaftlichen Maschinen, maritimen Maschinen und im Maschinenbau eingesetzt. Es handelt sich insbesondere um hydraulische Kolben-Zylinder-Einheiten.

Die Position des Kolbens in dem Zylinder dient dabei meist zur Erreichung einer definierten Stellung eines mit dem Kolben mittelbar verbundenen Werkzeugs und wird daher ermittelt.

### STAND DER TECHNIK

Eine Kolben-Zylinder-Einheit mit einem Zylinder, einem in dem Zylinder axial beweglich gelagerten Kolben und einer Kolbenpositionserfassungseinheit, die die axiale Position des Kolbens in dem Zylinder erfasst, ist aus der deutschen Patentschrift DE 10 2016 120 665 B3 bekannt. Bei der in Fig. 9 dargestellten Ausführungsform ist die Kolbenpositionserfassungseinheit in einer sich radial in dem Zylinder erstreckenden Montagebohrung angeordnet und weist eine Linse auf. Zur Strahlumlenkung ist ein Spiegel vorgesehen, der die eingehende und ausgehende Radarstrahlung umlenkt.

Eine Kolben-Zylinder-Einheit mit einem Zylinder, einem in dem Zylinder axial beweglichen gelagerten Kolben und einer Kolbenpositionserfassungseinheit, die mittels Hochfrequenztechnik die axiale Position des Kolbens in dem Zylinder erfasst, ist aus dem deutschen Gebrauchsmuster DE 20 2014 001 604 U1 bekannt.

Eine Kolben-Zylinder-Einheit mit einem Zylinder, einem in dem Zylinder axial beweglichen gelagerten Kolben und einer Kolbenpositionserfassungseinheit, die mittels Hochfrequenztechnik die axiale Position des Kolbens in dem Zylinder erfasst, ist aus der US-amerikanischen Patentanmeldung US 2013/0312601 A1 bekannt.

Eine Kolben-Zylinder-Einheit mit einem Zylinder, einem in dem Zylinder axial beweglichen gelagerten Kolben und einer Kolbenpositionserfassungseinheit, die mittels Hochfrequenztechnik die axiale Position des Kolbens in dem Zylinder erfasst, ist aus der internationalen Patentanmeldung WO 03/069269 A2 bekannt. Die Kolbenpositionserfassungseinheit weist eine Koppelsonde, ein Haltesystem und einen Wellenleiter auf, die in mehreren axialen Bohrungen in dem Zylinderkopf des Zylinders der Kolben-Zylinder-Einheit angeordnet sind.

Im Stand der Technik der hydraulischen Kolben-Zylinder-Einheiten von Arbeitsmaschinen sind Kolbenpositionserfassungseinheiten, die mittels magnetostriktiver Sensoren die axiale Position des Kolbens in dem Zylinder erfassen, allgemein bekannt. Der Aufbau derartiger magnetostriktiver Sensoren ist vergleichsweise technisch komplex und teuer.

Eine Abstandsmessvorrichtung mit einer Mikrowellen-Antennenanordnung ist aus der europäischen Patentanmeldung EP 1 752 792 A1 bekannt.

Eine Wellenleiter-Kopplungsvorrichtung und Positionssensorvorrichtung für einen Hydraulikzylinder sind aus der deutschen Patentanmeldung DE 10 2016 106 747 A1 bekannt.

Weiterer Stand der Technik ist aus EP 3 667 813 A1 und EP 2 966 725 A1 bekannt.

### AUFGABE DER ERFINDUNG

Der Erfindung liegt die Aufgabe zugrunde, eine Kolben-Zylinder-Einheit bereitzustellen, mit der die axiale Position des Kolbens in dem Zylinder mit geringem baulichen Aufwand exakt erfasst werden kann.

### LÖSUNG

Die Aufgabe der Erfindung wird erfindungsgemäß mit den Merkmalen des unabhängigen Patentanspruchs gelöst.

Weitere bevorzugte erfindungsgemäße Ausgestaltungen sind den abhängigen Patentansprüchen zu entnehmen.

### BESCHREIBUNG DER ERFINDUNG

Die Erfindung betrifft eine Kolben-Zylinder-Einheit mit einem Zylinder, einem in dem Zylinder axial beweglich gelagerten Kolben und einer Kolbenpositionserfassungseinheit. Die Kolben-Zylinder-Einheit besitzt eine Längsmittelachse entlang derer der Kolben axial beweglich gelagert ist. Der Zylinder weist eine sich radial in dem Zylinder erstreckende Montagebohrung auf, in der die Kolbenpositionserfassungseinheit angeordnet ist. Die Kolbenpositionserfassungseinheit dient zum Erfassen der axialen Position des Kolbens in dem Zylinder mittels Hochfrequenztechnik und weist hierfür eine Antenne zum Senden und Empfangen von Hochfrequenzsignalen auf. Ein Kollimator ist im Strahlengang der Antenne angeordnet. Die Antenne weist einen Hauptstrahlrichtungssinn auf, der sich parallel zu der Längsmittelachse erstreckt.

Unter dem in dieser Anmeldung verwendeten Begriff der Hochfrequenztechnik wird dessen weite Auslegung verstanden, d. h. alle Frequenzen zwischen etwa 3 MHz und etwa 30 THz. Gemeint ist insbesondere nicht die enge Definition der internationalen Fernmeldeunion, die unter dem Frequenzbereich der Hochfrequenztechnik nur Frequenzen zwischen 3 MHz und 30 MHz versteht.

Die Kolben-Zylinder-Einheit weist als Hauptkomponenten einen Kolben und einen Zylinder auf. Unter dem Zylinder wird dabei eine größere Einheit verstanden, die insbesondere die Unterkomponenten eines Zylinderrohrs und eines Zylinderkopfs aufweist. Als Kolben wird in dieser Anmeldung die Komponente verstanden, die sich im Zylinderrohr bewegt und dabei mit dem Zylinderrohr einen abgeschlossenen Raum bildet. Der Kolben ist dann insbesondere mit einer Kolbenstange verbunden.

Bei der Kolben-Zylinder-Einheit handelt es sich insbesondere um eine hydraulische Kolben-Zylinder-Einheit. Es kann sich aber auch um eine pneumatische Kolben-Zylinder-Einheit handeln.

Die Erfassung, Bestimmung, Auswertung, Einstellung und Vorgabe der Position des Kolbens in dem Zylinder einer Kolben-Zylinder-Einheit ist aus verschiedenen Gründen im technischen Gebiet der Arbeitsmaschinen von Interesse. So kann es beispielsweise gewollt sein, eine definierte Endposition des Kolbens und damit des mittelbar mit diesem verbundene Werkzeugs der Arbeitsmaschine sicher anzufahren. Auch eine Automatisierung im Sinne des computergesteuerten Anfahrens verschiedener Positionen des Kolbens nacheinander und eine programmierbare Abfolge sind damit möglich. Des Weiteren können zulässige Arbeitsbereiche, innerhalb derer sich die Kolben-Zylinder-Einheit bewegen darf, definiert und verlässlich eingehalten werden. Auch eine Überlastung der Kolben-Zylinder-Einheit kann durch eine Überwachung der Position des Kolbens und der Last vermieden werden. Durch ein Messen von Druck, Temperatur und Position kann die entsprechende Belastung für den Kolben und den Zylinder ermittelt werden. Bei einer Überlastung können dann entsprechende Maßnahmen vorgeschlagen oder eingeleitet werden.

Bei der Arbeitsmaschine kann es sich z. B. um einen Radlader, Bagger, Kipper, Kran oder Stapler oder eine Hebebühne handeln. Die Kolben-Zylinder-Einheit dient dabei insbesondere zum Lenken, Stützen, Ausschieben, Neigen, Heben oder sonstigen Verfahren der Arbeitsmaschine oder eines Werkzeugs oder anderen Teils der Arbeitsmaschine.

Der Kollimator verbessert die Präzision der Kolbenpositionserfassungseinheit in mehrfacher Hinsicht und führt daher zu verbesserten Messergebnissen bei der Positionsbestimmung des Kolbens. Unter einem Kollimator versteht man eine optische Vorrichtung zum Erzeugen eines Strahlengangs mit parallelen Strahlen aus zuvor nicht-parallelen Strahlen divergenter Quellen. In einem ersten Strahlungsrichtungssinn wandelt der Kollimator also nicht-parallele Strahlen in parallele Strahlen um. In dem entgegengesetzten zweiten Strahlungsrichtungssinn bündelt der Kollimator parallel in diesen eintretende Strahlen. Bei der hier vorliegenden Positionsbestimmung des Kolbens in dem Zylinder mittels hochfrequenter Strahlen bzw. hochfrequenter Signale werden diese beiden Eigenschaften vorteilhaft genutzt.

Der Hauptstrahlrichtungssinn der Antenne erstreckt sich parallel zu der Längsmittelachse der Kolben-Zylinder-Einheit. Die Längsmittelachse entspricht der Achse, entlang derer sich der Kolben hin und her bewegt. "Parallel" ist im weiteren Sinne zu verstehen und bedeutet also entweder "echt parallel" oder identisch.

Der erste Strahlungsrichtungssinn ist der Empfangsfunktion der Kolbenpositionserfassungseinheit zugeordnet, d. h. den Strahlen, die bereits reflektiert wurden und nun auf ihrem Weg zurück zur Kolbenpositionserfassungseinheit zunächst auf den Kollimator treffen. In diesem Fall wirkt der Kollimator als ein Filter, der nur oder zumindest im Wesentlichen nur die Strahlen auf die Kolbenpositionserfassungseinheit fokussiert bzw. zurücküberträgt, die zuvor parallel zueinander und zu der Längsachse des Kolbens verlaufen sind. Damit werden die Strahlen bzw. Signale herausgefiltert, die nicht oder zumindest nicht direkt von der endseitigen Kolbenbodenfläche stammen. Solche unerwünschten Strahlen sind darauf zurückzuführen, dass in der Realität die Brechung des Kollimators nicht ideal ist, die Strahlen nicht ideal punktförmig abgesendet und empfangen werden und die Kolbenbodenfläche nicht ideal eben ist. Dadurch werden beispielsweise Strahlen von der Kolbenbodenfläche an die Innenwand des Zylinderrohrs reflektiert und gelangen erst danach in den Bereich des Kollimators. Diese Strahlen lassen keine exakte Aussage zur Position des Kolbens in dem Zylinderrohr zu. Mit dem neuen Kollimator werden diese Strahlen bzw. Signale ganz oder teilweise herausgefiltert, da sie nicht zurück auf den Empfänger der Kolbenpositionserfassungseinheit gelangen und somit nicht in das Messergebnis eingehen.

Der zweite Strahlungsrichtungssinn ist der Sendefunktion der Kolbenpositionserfassungseinheit zugeordnet, d. h. den Strahlen, die von dem Sender der Kolbenpositionserfassungseinheit abgesendet werden und zunächst auf den Kollimator treffen. In diesem Fall wirkt der Kollimator als ein Verstärker, der mehr Strahlen so absendet, dass sie unmittelbar und senkrecht auf die Kolbenbodenfläche treffen. Diese Strahlen verlaufen parallel zueinander und zu der Längsachse des Kolbens.

Hierdurch wird die Signalqualität (Signal-Rausch-Verhältnis) wesentlich verbessert. Dies führt zu einer Erhöhung der Genauigkeit des Messergebnisses insbesondere bei großen Abständen der Kolbenbodenfläche von dem Zylinderkopf.

Der Kollimator kann eine dielektrische Linse aufweisen. Mittels einer solchen dielektrischen Linse ist die gewollte Erzeugung des parallelen Strahlengangs bei den zugrundeliegenden hochfrequenten Signalen gut umsetzbar. Der Kollimator kann eine dielektrische Linse oder eine Kombination mehrerer dielektrischer Linsen aufweisen. Der Kollimator kann aber auch in anderer geeigneter Weise ausgebildet sein und z. B. eine Fresnel-Zonenplatte aufweisen.

Die dielektrische Linse weist einen Linsenkörper mit einer konvex gewölbten Linsenfläche auf. Der Linsenkörper besteht aus einem dielektrischen Material, z. B. einem dielektrischen Kunststoff oder einer dielektrischen Keramik. Das dielektrische Material kann z. B. Polytetrafluorethylen, Polyethylen oder Polypropylen aufweisen.

Die dielektrische Linse hat eine gute Durchlässigkeit für die Hochfrequenzstrahlung. Sie besitzt eine Dielektrizitätskonstante (Permittivität), die größer als die von Luft und größer als die des Hydraulikmediums in der Kolben-Zylinder-Einheit ist. Die Permittivität der dielektrischen Linse kann z. B. zwischen 20 % und 50 % größer sein als die des Hydraulikmediums in der Kolben-Zylinder-Einheit. Die Permittivitätsdifferenz und die Krümmung der Linse sind aufeinander abgestimmt.

Die dielektrische Linse kann eine planar-konvexe Linsenform aufweisen. Die konvexe Seite der Linse ist dem Kolben zugewandt. Die planare Seite ist dem Empfänger der Kolbenpositionserfassungseinheit zugewandt. Andere Linsenformen sind aber auch möglich.

Die von dem annähernd punktförmigen Sender der Kolbenpositionserfassungseinheit radial und durch Luft abgesendeten Signale treffen also zunächst auf die planare Seite der dielektrischen Linse. Von dort werden sie in Richtung der Zentralachse der Linse gebrochen, da die Permittivität des Materials der Linse größer als die Permittivität von Luft ist. Um die gewünschte Ausrichtung parallel zur Längsachse des Kolbens zu erreichen, ist der Krümmungswinkel der konvexen Seite der Linse so gewählt, dass an jedem Punkt der erforderliche Brechungswinkel entsteht.

Der Kollimator kann Teil der Kolbenpositionserfassungseinheit und insbesondere ein integrierter Bestandteil der Kolbenpositionserfassungseinheit sein. Der Kollimator ist dann also in die Kolbenpositionserfassungseinheit integriert bzw. diese bilden gemeinsam eine integrierte Baueinheit. Es ist aber auch möglich, dass der Kollimator strukturell getrennt von der Kolbenpositionserfassungseinheit angeordnet ist und diese nur funktional eine Einheit bilden.

Die Kolbenpositionserfassungseinheit kann als eine kompakte Einbaupatrone ausgebildet sein, die sowohl den Sensor als auch die Auswerteelektronik enthält. Beim Einbau bzw. Ausbau wird also die gesamte Kolbenpositionserfassungseinheit eingesetzt bzw. demontiert.

Es ist aber auch möglich, dass das Gehäuse der Kolbenpositionserfassungseinheit fest im Zylinder montiert und die elektronische Baueinheit im montierten Zustand des Gehäuses in dieses eingesetzt bzw. aus diesem entfernt wird. Damit ist ein Austausch der Kolbenpositionserfassungseinheit möglich, ohne die Kolben-Zylinder-Einheit demontieren zu müssen. Der Austausch der elektronischen Baueinheit kann dabei am voll mit Öl befüllten Zylinder erfolgen. Eine Entleerung, Befüllung und Entlüftung des Zylinders ist somit nicht erforderlich.

Die sich radial in dem Zylinder erstreckende Montagebohrung lässt sich in sehr einfacher Weise in den Zylinder einbringen, insbesondere durch Bohren. Dies geschieht beginnend an der äußeren Oberfläche des Zylinderkopfs.

Die Montagebohrung kann dabei einen im Vergleich zu ihrer Länge vergleichsweise kleinen Durchmesser besitzen, so dass die Montagebohrung in axialer Richtung der Kolben-Zylinder-Einheit nur einen geringen Platzbedarf besitzt. Somit lässt sie sich problemlos bei einer Neukonstruktion einer Kolben-Zylinder-Einheit ohne zusätzlichen Materialbedarf berücksichtigen und bei existierenden Kolben-Zylinder-Einheiten nachträglich einbringen. Für die Integration der neuen Kolbenpositionserfassungseinheit ist somit keine geometrische Änderung der Kolben-Zylinder-Einheit gegenüber einer Kolben-Zylinder-Einheit ohne eine solche Kolbenpositionserfassungseinheit erforderlich. Des Weiteren erfolgt keine nennenswerte Schwächung der Zylinderstruktur.

Der Zylinder kann einen Zylinderkopf aufweisen, wobei dann die Montagebohrung in dem Zylinderkopf der Kolben-Zylinder-Einheit angeordnet ist. Die Kolbenpositionserfassungseinheit kann derart in der Montagebohrung angeordnet sein, dass sich ihre längste Dimension radial in dem Zylinderkopf erstreckt. In dieser Weise wird der vorhandene Bauraum des Zylinderkopfs für die Anordnung der Kolbenpositionserfassungseinheit effektiv genutzt.

Die Montagebohrung kann über eine sich axial erstreckende Sensorsignalbohrung wirkend mit dem Innenraum des Zylinders verbunden sein. Diese Sensorsignalbohrung ermöglicht das erforderliche Senden und Empfangen der für die Positionserfassung genutzten hochfrequenten Sensorsignale. Wenn es sich um eine hydraulische Kolben-Zylinder-Einheit handelt, ist die Sensorsignalbohrung mit Hydrauliköl gefüllt.

Die Montagebohrung kann mittels einer Ausgleichsbohrung mit der Umgebung verbunden sein. In dieser Weise wird die Montage der Kolbenpositionserfassungseinheit in der ansonsten geschlossenen und durch die Kolbenpositionserfassungseinheit abgedichteten Montagebohrung erleichtert. Es ist aber auch möglich, auf eine solche Ausgleichsbohrung zu verzichten und eine gewisse Komprimierung der Luft in der Montagebohrung zu akzeptieren.

Die Ausgleichsbohrung kann z. B. in dem Gehäuse - insbesondere in dem Gehäuseboden - der Kolbenpositionserfassungseinheit angeordnet sein. Es ist aber auch möglich, dass die Ausgleichsbohrung in dem Zylinder angeordnet ist. Die Ausgleichsbohrung kann in einem von der Öffnung der Montagebohrung abgewandten axialen Endbereich der Montagebohrung angeordnet sein.

Die Sensorsignalbohrung, durch die die Signale gesendet werden, erstreckt sich nicht über die gesamte Zylinderkopfbodenfläche. Die verbliebene ringförmige, geschlossene Zylinderkopfbodenfläche reflektiert Signale, die von der Kolbenbodenfläche stammen. Diese bereits reflektierten Signale gelangen dann normalerweise wieder auf die Kolbenbodenfläche, werden von dieser erneut reflektiert und gelangen dann ggf. durch die Sensorsignalbohrung auf den Empfänger der Kolbenpositionserfassungseinheit. Aus einem solchen Signal lässt sich die Position des Kolbens nicht korrekt bestimmen. Um dieses Problem zu beheben bzw. abzumildern, kann der Zylinderkopf eine die Sensorsignalbohrung umgebende Zylinderkopfbodenfläche aufweisen, in der eine Mehrzahl von Strahlablenkungselementen angeordnet ist. Die Strahlablenkungselemente erfüllen eine weitere Filterfunktion, indem sie die oberhalb beschriebenen mehrfach reflektierten Signale bewusst so ablenken, dass ihr Winkel stark von der Richtung parallel zu der Längsachse des Kolbens abweicht. Dadurch verlängert sich der Weg der Signale durch das Hydraulikmedium und die Dämpfung der Signale steigt entsprechend an. Letztendlich gelangen diese Signale nicht, nur mit geringer Wahrscheinlichkeit und/oder nur gedämpft auf den Empfänger der Kolbenpositionserfassungseinheit. Hierdurch wird die Signalqualität weiter verbessert.

Der Kollimator kann in dem Gehäuse der Kolbenpositionserfassungseinheit angeordnet sein. Ebenfalls möglich ist, dass der Kollimator das Gehäuse mitbildet. Dabei kann der Kollimator aus demselben Material wie das restliche Gehäuse oder aus einem anderen Material bestehen. Es ist aber auch möglich, dass der Kollimator außerhalb des Gehäuses angeordnet ist. In diesem Fall ist der Kollimator insbesondere in der Sensorsignalbohrung angeordnet.

Die Strahlablenkungselemente können als Senkelemente ausgebildet sind. Es kann sich insbesondere um voneinander beabstandete kegelförmige Vertiefungen in der Zylinderkopfbodenfläche handeln.

Die Strahlablenkungselemente können über einen Teil oder die gesamte Zylinderkopfbodenfläche verteilt angeordnet sein. Wenn es sich nur um einen Teil handelt, sind die Strahlablenkungselemente vorzugsweise in dem die Sensorsignalbohrung umgebenden Bereich der Zylinderkopfbodenfläche angeordnet.

Die Kolbenpositionserfassungseinheit kann ein Gehäuse und eine in dem Gehäuse angeordnete elektronische Baueinheit aufweisen. Die elektronische Baueinheit kann dabei durch das Gehäuse gegenüber dem Innenraum des Zylinders abgedichtet sein. In dieser Weise verhindert das Gehäuse das Eindringen von Hydrauliköl in den Innenraum der Kolbenpositionserfassungseinheit, in dem sich das Kernelement der Kolbenpositionserfassungseinheit - nämlich die elektronische Baueinheit - befindet. Die elektronische Baueinheit erfüllt mindestens die Funktion des Sendens und Empfangens der Hochfrequenzsignale. Sie kann aber auch alle weiteren gewünschten Funktionen der Kolbenpositionserfassungseinheit erfüllen, wodurch diese eine kompakte autarke Einheit bildet. Die Kolbenpositionserfassungseinheit kann also als so genannter Smart-Sensor ausgebildet sein. Dies bedeutet, dass neben dem eigentlichen Sensor auch Mittel für die Bestimmung, Berechnung, Auswertung und Übermittlung der Daten in der Kolbenpositionserfassungseinheit enthalten sind. Zu den Daten kann auch die Temperatur gehören.

Das Gehäuse der Kolbenpositionserfassungseinheit kann insbesondere aus Kunststoff oder Keramik bestehen. Das Material und der Aufbau des Gehäuses sind so gewählt, dass sie sich für den Einsatz in diesem druckmäßig hoch beaufschlagten Bereich eignen. Es ist nämlich durchaus üblich, dass in diesem Bereich einer Kolben-Zylinder-Einheit - je nach deren Dimensionierung - ein Druck von etwa 600 bar oder mehr herrscht.

Das Material des Gehäuses der Kolbenpositionserfassungseinheit ist des Weiteren so gewählt, dass es für die Hochfrequenzsignale durchlässig ist. Aus diesem Grund sind beispielsweise Metallwerkstoffe nicht geeignet.

Das Gehäuse kann aus einem thermoplastischen Kunststoff, insbesondere einem Polyaryletherketon, insbesondere Polyetheretherketon (PEEK), bestehen. Derartige Kunststoffe weisen die zuvor beschriebenen gewünschten Eigenschaften der hohen Druckbeständigkeit und gleichzeitigen Durchlässigkeit für Hochfrequenzsignale auf. So hat sich gezeigt, dass ein Gehäuse aus PEEK problemlos bei einem Druck von bis zu 800 bar oder mehr eingesetzt werden kann.

Das Gehäuse der Kolbenpositionserfassungseinheit kann zylindrisch ausgebildet sein. Diese Ausbildung ermöglicht die einfache Montage der Kolbenpositionserfassungseinheit in der Montagebohrung. Andere Geometrien, z. B. rechteckig oder oval, wären aber ebenfalls möglich.

Das Gehäuse kann an seinem äußeren Umfang eine erste Nut und eine zweite Nut aufweisen, in denen jeweils eine Dichtung angeordnet ist. Diese beiden Dichtungen dienen zum Abdichten des Innenraums des Zylinders gegenüber der Umgebung in dem Bereich, in dem sich die Montagebohrung befindet. Die Verbindung der Montagebohrung mit dem Innenraum des Zylinders ist dabei über die Sensorsignalbohrung realisiert. Die Sensorsignalbohrung ist in radialer Richtung zwischen der ersten Nut und der zweiten Nut angeordnet.

Die effektiven Dichtflächen der Dichtungen können im Wesentlichen gleich groß sein. Hierdurch wird eine kräfteneutrale Anordnung der Kolbenpositionserfassungseinheit in der Montagebohrung erreicht. Daraus ergibt sich, dass die Kolbenpositionserfassungseinheit nicht oder nur mit einfachen Sicherungsmitteln in der Montagebohrung gesichert werden muss. Die Kolbenpositionserfassungseinheit kann mit einem einfachen Sicherungselement, z. B. einem Sicherungsring, befestigt werden. Es wäre aber z. B. auch möglich, die Kolbenpositionserfassungseinheit mittels einer Schraubverbindung in der Montagebohrung zu befestigen.

Die Kolbenpositionserfassungseinheit kann ein Anschlusselement für die Übertragung von Daten von der elektronischen Baueinheit aufweisen, wobei das Anschlusselement mit der elektronischen Baueinheit und dem Gehäuse verbunden ist. Bei dem Anschlusselement kann es sich um ein kabelgebundenes oder ein kabelloses Anschlusselement handeln. Im Fall eines kabelgebundenen Anschlusselements handelt es sich um einen Stecker oder eine Buchse. Ein mögliches geeignetes Beispiel hierfür ist ein M12-Stecker bzw. eine M12-Buchse. Eine kabellose Übertragung per WLAN, Bluetooth oder einem anderen geeigneten drahtlosen Übertragungsstandard ist aber ebenfalls möglich.

Die Kolbenpositionserfassungseinheit kann mit Ausnahme eines Teils des Anschlusselements vollständig in der Montagebohrung angeordnet sein. Sie kann auch vollständig in der Montagebohrung angeordnet sein. Dies bedeutet, dass sich die Außengeometrie der Kolben-Zylinder-Einheit gegenüber einer Kolben-Zylinder-Einheit ohne eine solche Kolbenpositionserfassungseinheit nicht verändert. Es ergibt sich somit kein geometrischer Anpassungsbedarf der Arbeitsmaschine.

Die elektronische Baueinheit kann die Antenne zum Senden und Empfangen der Hochfrequenzsignale durch das Gehäuse hindurch aufweisen. Die Antenne kann dabei so auf der elektronischen Baueinheit und diese so in dem Gehäuse angeordnet sein, dass die Hochfrequenzsignale durch die Sensorsignalbohrung gerichtet sind. So ermöglichen das Material des Gehäuses und der durch die Sensorsignalbohrung geschaffene freie Raum das ungestörte Senden und Empfangen der Hochfrequenzsignale.

Das Gehäuse kann ein erstes Ausrichtelement und die elektronische Baueinheit ein korrespondierendes zweites Ausrichtelement aufweisen, wobei das erste Ausrichtelement und das zweite Ausrichtelement so aufeinander abgestimmt sind, dass die elektronische Baueinheit nur in genau einer Orientierung vollständig in dem Gehäuse montierbar ist. In dieser Weise wird eine Fehlmontage der elektronischen Baueinheit in dem Gehäuse verhindert.

Das erste Ausrichtelement kann als eine außermittig in einem axialen Endbereich des Gehäuses angeordnete Nut und das zweite Ausrichtelement als eine ebenso außermittig in einem korrespondierenden axialen Endbereich der elektronischen Baueinheit gebildete Feder ausgebildet sein, die gemeinsam eine Nut-Feder-Verbindung bilden. Die Feder kann daher in nur genau einer Relativanordnung zu der Nut in der Nut angeordnet werden. An dem Gehäuse kann ein drittes Ausrichtelement und an der Montagebohrung bzw. dem Zylinder ein korrespondierendes viertes Ausrichtelement angeordnet sein. Das dritte Ausrichtelement kann z. B. ein Vorsprung und das vierte Ausrichtelement eine Ausnehmung oder umgekehrt sein. Andere geometrische Ausbildungen sind ebenfalls möglich. In dieser Weise wird sichergestellt, dass das Gehäuse nur in genau einer Orientierung in dem Zylinder der Kolben-Zylinder-Einheit angeordnet werden kann.

Durch das Ausrichtelement wird insgesamt erreicht, dass der Hauptstrahlrichtungssinn der Antenne korrekt ausgerichtet ist. Der Hauptstrahlrichtungssinn der Antenne erstreckt sich dann senkrecht zu der Längsmittelachse des Gehäuses der Kolbenpositionserfassungseinheit und entlang der Längsmittelachse der Kolben-Zylinder-Einheit oder parallel dazu. Der Hauptstrahlrichtungssinn der Antenne verläuft in Richtung der Sensorsignalbohrung und des Kolbens.

Die Kolbenpositionserfassungseinheit kann ein Gehäuse und eine in dem Gehäuse angeordnete elektronische Baueinheit aufweisen, wobei die Kolbenpositionserfassungseinheit so ausgebildet und in der Montagebohrung angeordnet ist, dass der Innenraum des Zylinders gegenüber der Umgebung der Kolben-Zylinder-Einheit abgedichtet ist und die elektronische Baueinheit ohne Aufhebung der Dichtwirkung aus dem Gehäuse entfernbar und in das Gehäuse einsetzbar ist. Damit ist eine Montage der elektronischen Baueinheit in dem Gehäuse und eine Demontage der elektronischen Baueinheit aus dem Gehäuse bei mit Öl befüllter Kolben-Zylinder-Einheit möglich. Dies bedeutet, dass im Fall einer technischen Fehlfunktion der elektronischen Baueinheit diese aus dem Gehäuse entfernt werden kann, während das Gehäuse in der Montagebohrung verbaut bleibt.

Bei den Hochfrequenzsignalen kann es sich um Mikrowellensignale handeln.

Die Hochfrequenzsignale können eine Frequenz von mindestens 20 GHz, insbesondere mindestens 50 GHz, insbesondere mindestens 100 GHz, insbesondere zwischen 20 GHz und 400 GHz, insbesondere zwischen 100 GHz und 400 GHz, insbesondere zwischen 100 GHz und 300 GHz, insbesondere zwischen 100 GHz und 150 GHz, insbesondere etwa 120 GHz, besitzen.

Die Hochfrequenzsignale können Dauerstrichsignale sein. Die Hochfrequenzsignale können insbesondere frequenzmodulierte Dauerstrichsignale sein. Es können in einer gewissen Abfolge unterschiedliche Frequenzen gesendet werden. Beispielsweise kann es sich dabei um Frequenzen von 120 GHz, 121 GHz und 122 GHz usw. handeln.

Ein frequenzmoduliertes Dauerstrichradar (FMCW-Radar) sendet kontinuierlich ein sich frequenzmäßig änderndes Sendesignal ab. Im Gegensatz zu einem unmodulierten Radar (CW-Radar) kann ein frequenzmoduliertes Dauerstrichradar seine Arbeitsfrequenz während der Messung ändern. Durch diese Änderung der Frequenz wird der für die Messung des Abstands zu dem zu messenden Objekt (hier: der Kolben) erforderliche Zeitbezug geschaffen. Die Entfernungsmessung wird dann durch einen Frequenzvergleich des empfangenen Signals mit dem gesendeten Signal realisiert. Da dieses Messprinzip für sich genommen im Stand der Technik bekannt ist, wird auf eine weitere Beschreibung verzichtet und beispielsweise auf den Artikel "Dauerstrichradar" bei WIKIPEDIA verwiesen (https://de.wikipedia.org/wiki/Dauerstrichradar).

Vorteilhafte Weiterbildungen der Erfindung ergeben sich aus den Patentansprüchen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Kollimator die Rede ist, ist dies so zu verstehen, dass genau ein Kollimator, zwei Kollimatoren oder mehr Kollimatoren vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Schnittansicht einer ersten beispielhaften Ausführungsform einer neuen Kolben-Zylinder-Einheit mit einer neuen Kolbenpositionserfassungseinheit.
- **Fig. 2**: zeigt eine vergrößerte Ansicht eines Teils der Kolben-Zylinder-Einheit gemäß Fig. 1.
- **Fig. 3**: zeigt das Detail A der Kolben-Zylinder-Einheit aus Fig. 2.
- **Fig. 4**: zeigt eine Ansicht eines Teils der Kolben-Zylinder-Einheit gemäß Fig. 1 von oben.
- **Fig. 5**: zeigt eine perspektivische Explosionsdarstellung eines Teils der Kolben-Zylinder-Einheit gemäß Fig. 1.
- **Fig. 6**: zeigt eine perspektivische Ansicht einer beispielhaften Ausführungsform einer elektronischen Baueinheit der Kolbenpositionserfassungseinheit der Kolben-Zylinder-Einheit gemäß Fig. 1.
- **Fig. 7**: zeigt eine perspektivische Ansicht der Kolbenpositionserfassungseinheit der Kolben-Zylinder-Einheit gemäß Fig. 1 mit einem integrierten Kollimator.
- **Fig. 8**: zeigt eine teilweise geschnittene perspektivische Ansicht der Kolbenpositionserfassungseinheit gemäß Fig. 7.
- **Fig. 9**: zeigt eine perspektivische Ansicht des Zylinderkopfs der Kolben-Zylinder-Einheit gemäß Fig. 1.
- **Fig. 10**: zeigt eine Schnittansicht einer zweiten beispielhaften Ausführungsform der neuen Kolben-Zylinder-Einheit mit einer neuen Kolbenpositionserfassungseinheit.
- **Fig. 11**: zeigt eine vergrößerte Ansicht eines Teils der Kolben-Zylinder-Einheit gemäß Fig. 10.
- **Fig. 12**: zeigt das Detail B der Kolben-Zylinder-Einheit aus Fig. 11.
- **Fig. 13**: zeigt eine perspektivische Explosionsdarstellung eines Teils der Kolben-Zylinder-Einheit gemäß Fig. 10.
- **Fig. 14**: zeigt eine perspektivische Ansicht der Kolbenpositionserfassungseinheit der Kolben-Zylinder-Einheit gemäß Fig. 10.
- **Fig. 15**: zeigt eine teilweise geschnittene perspektivische Ansicht der Kolbenpositionserfassungseinheit gemäß Fig. 14.
- **Fig. 16**: zeigt eine perspektivische Ansicht des Kollimators der Kolben-Zylinder-Einheit gemäß Fig. 10.
- **Fig. 17**: zeigt eine perspektivische Ansicht des Zylinderkopfs der Kolben-Zylinder-Einheit gemäß Fig. 10.

### FIGURENBESCHREIBUNG

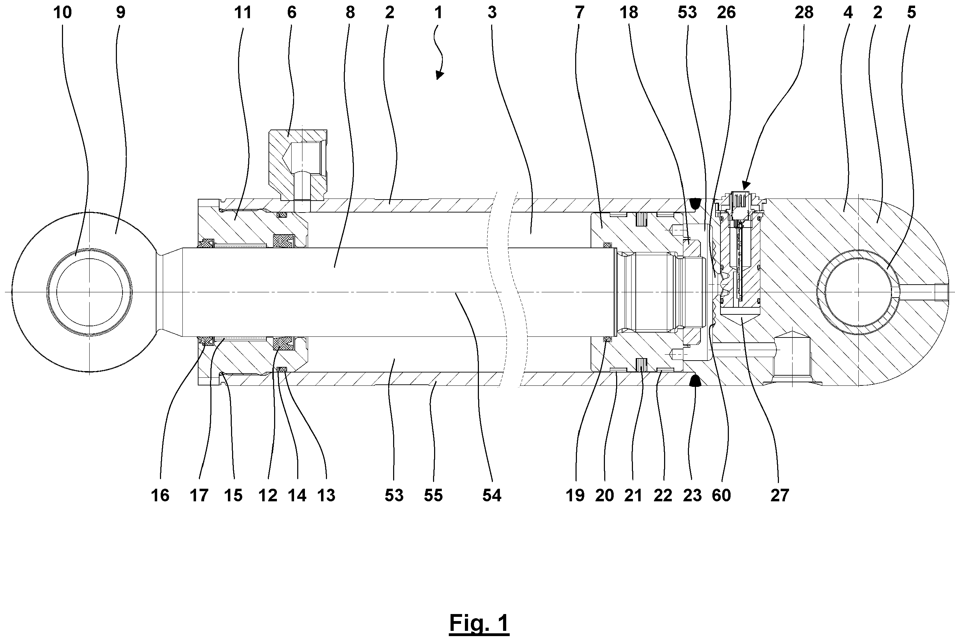

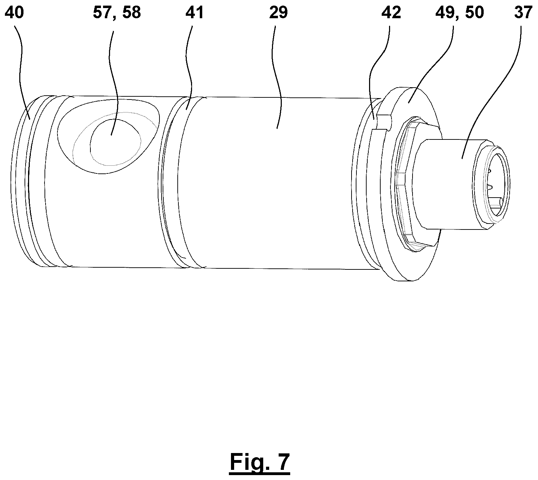

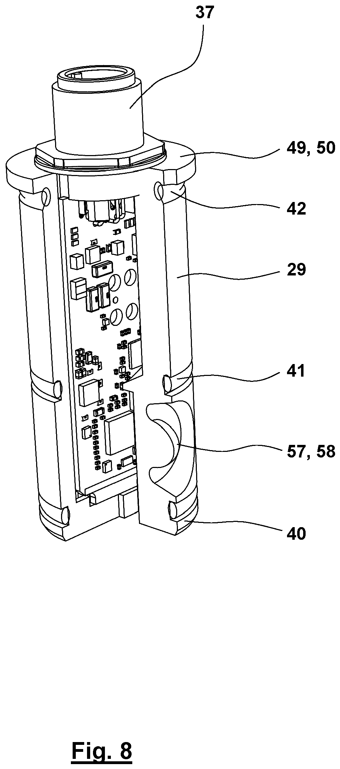

**Fig. 1-9** zeigen verschiedene Ansichten einer ersten beispielhaften Ausführungsform einer neuen Kolben-Zylinder-Einheit 1 sowie deren Teile.

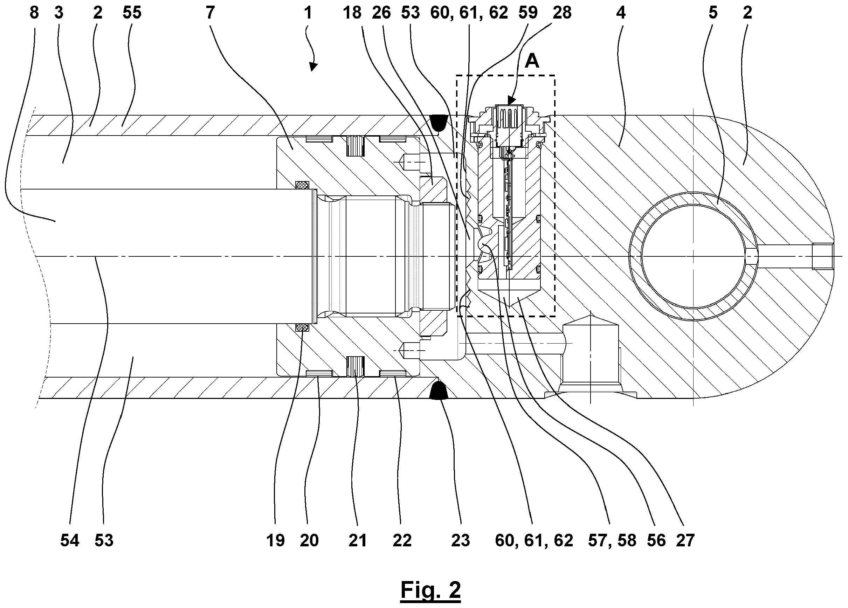

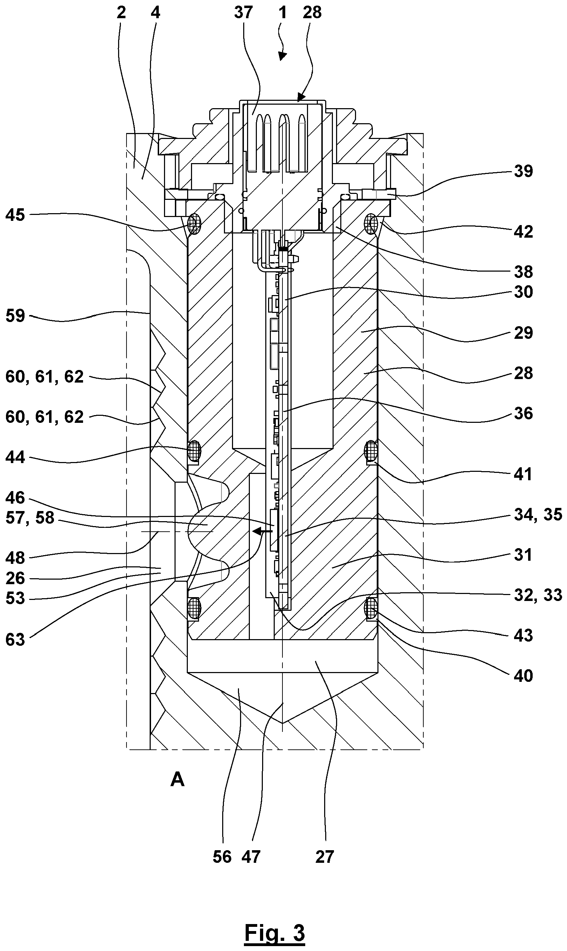

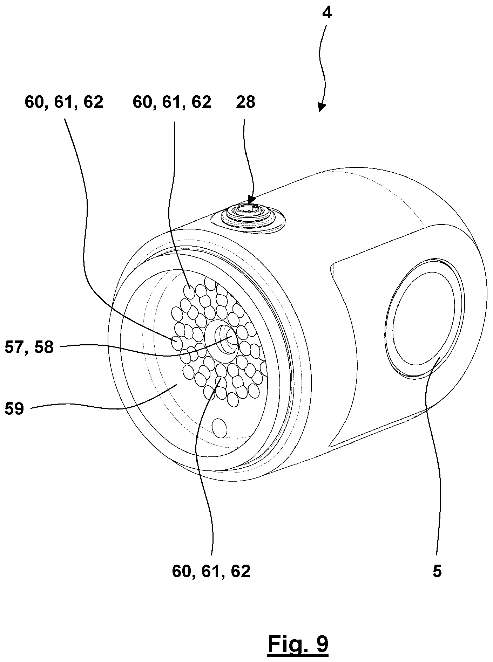

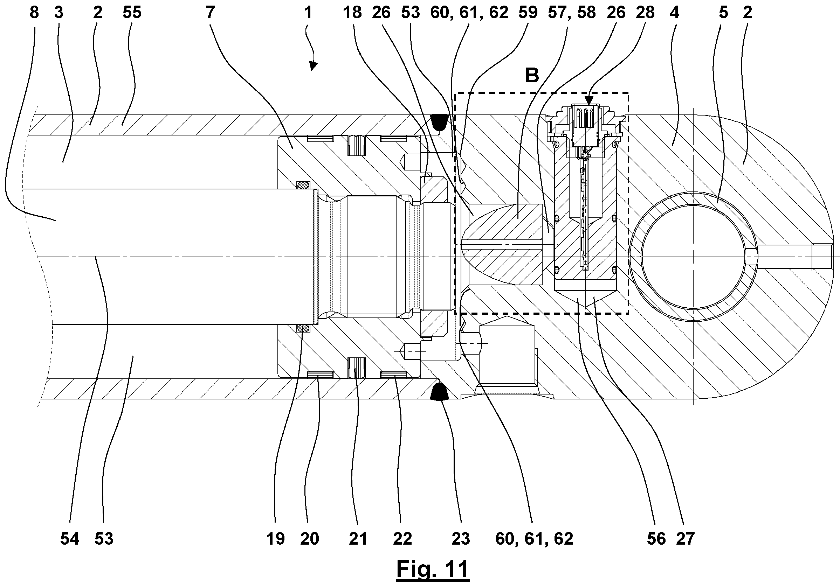

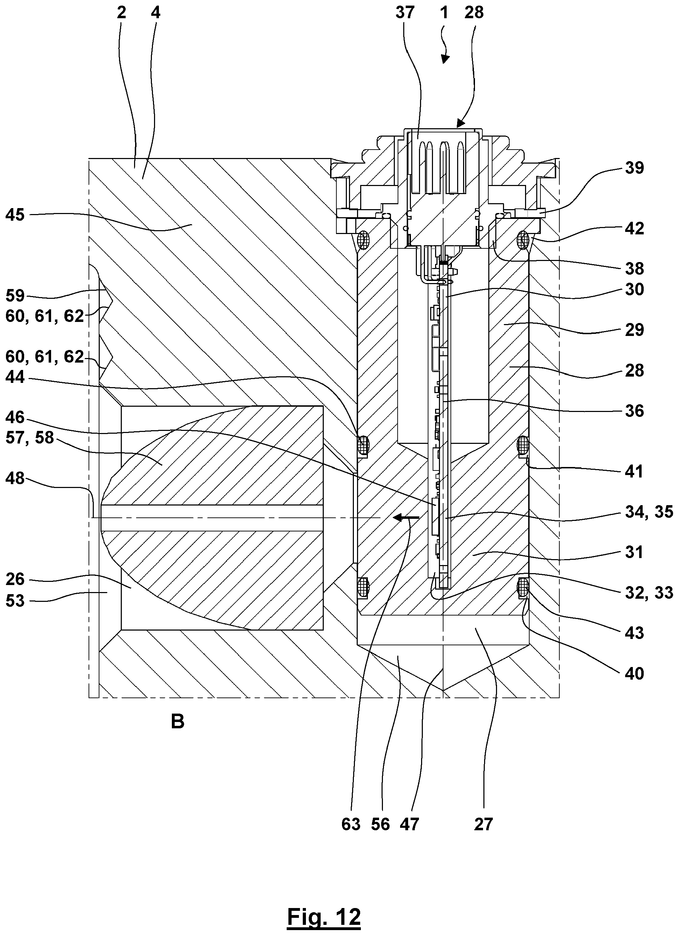

In Fig. 1 ist mittels der gekrümmten Abbruchlinien kenntlich gemacht, dass die Kolben-Zylinder-Einheit 1 tatsächlich länger ausgebildet und nur ein Teil dargestellt ist. Auch in den Fig. 2, 4 und 5 sind vergleichbare Abbruchlinien vorhanden. In Fig. 3 endet die Darstellung an den geraden Abbruchlinien. Entsprechendes gilt auch für die Fig. 9, 10, 11 und 12.

Die Kolben-Zylinder-Einheit 1 weist einen Zylinder 2 mit einem Zylinderrohr 55, einem Innenraum 3 und einem Zylinderkopf 4 auf. Im Bereich des Zylinderkopfs 4 ist eine Lagerbuchse 5 für die Lagerung der Kolben-Zylinder-Einheit 1 an einer nicht dargestellten Arbeitsmaschine angeordnet.

Im vorliegenden Beispiel handelt es sich um eine hydraulische Kolben-Zylinder-Einheit 1, so dass der Innenraum 3 mit Öl 53 gefüllt ist. Hierfür weist der Zylinder 2 einen Ölanschluss 6 und einen Ölanschluss 24 auf. An den Ölanschlüssen 6, 24 sind hier nicht dargestellte Ölleitungen angeschlossen. Ebenfalls nicht dargestellt ist eine Hydraulikpumpe, mittels der in für sich genommen bekannter Weise der Kolben 7 mittels des Öls 53 so mit Druck beaufschlagt wird, dass sich der Kolben 7 und die damit verbundene Kolbenstange 8 in dem jeweiligen Richtungssinn entlang der Längsmittelachse 54 der Kolben-Zylinder-Einheit 1 bewegen. In dieser Weise tritt Öl durch die Ölanschlüsse 6, 24 in den Innenraum 3 des Zylinders 2 ein bzw. verlässt diesen je nach Bewegungsrichtungssinn des Kolbens 7 in dem Zylinder 2. In den Fig. 1 und 2 ist dabei die ganz nach rechts verfahrene Stellung des Kolbens 7 - d. h. die eingefahrene Stellung der Kolben-Zylinder-Einheit 1 - dargestellt.

Wie oberhalb ausgeführt wurde, weist die Kolben-Zylinder-Einheit 1 weiterhin den Kolben 7 auf. Der Kolben 7 ist mit der Kolbenstange 8 verbunden, an deren einen axialen Ende ein Kolbenstangenauge 9 angeordnet ist. Das Kolbenstangenauge 9 weist ebenfalls eine Lagerbuchse 10 auf. Die Lagerbuchse 10 dient für die mittelbare Verbindung des Kolbens 7 mit einem nicht dargestellten Werkzeug oder anderen Teils der Arbeitsmaschine.

Die Kolbenstange 8 ist mittels einer Führungsbuchse 11 in axialer Richtung entlang der Längsmittelachse 54 translatorisch beweglich gelagert. Für die Lagerung und Abdichtung sind eine Stangendichtung 12, ein O-Ring 13 und ein Stützring 14 vorgesehen. Am anderen axialen Ende der Führungsbuchse 11 sind ein weiterer O-Ring 15, ein Abstreifer 16 und ein Gleitlager 17 angeordnet.

Der Kolben 7 ist drehfest auf der Kolbenstange 8 angeordnet und mittels einer Sicherungsmutter 18 gesichert. Des Weiteren sind an dem Kolben 7 ein O-Ring 19, ein Kolbenführungsring 20, eine Kolbendichtung 21, ein weiterer Kolbenführungsring 22 und eine Schweißnaht 23 angeordnet.

In dieser Weise ist der Kolben 7 gemeinsam mit der Kolbenstange 8 und dem Kolbenstangenauge 9 translatorisch hin- und hergehend abdichtend in dem Zylinderrohr 55 des Zylinders 2 gelagert.

An den Teil des Innenraums 3, der durch das Zylinderrohr 55 gebildet wird, schließt sich eine Kammer 25 in dem Zylinderkopf 4 an, die ebenfalls den Innenraum 3 mitbildet und mit Öl 53 gefüllt ist. Die Kammer 25 ist mit dem Ölanschluss 24 verbunden. Mit dieser Kammer 25 ist wiederum eine sich axial erstreckende Sensorsignalbohrung 26 verbunden. Die Sensorsignalbohrung 26 ist also mit dem Innenraum 3 verbunden und mit Öl 53 gefüllt.

Die Sensorsignalbohrung 26 ist wiederum mit einer sich radial in dem Zylinder 2 erstreckenden Montagebohrung 27 verbunden. Die Montagebohrung 27 erstreckt sich bis zur äußeren Oberfläche des Zylinderkopfs 4 und kann mittels einer nicht dargestellten Ausgleichsbohrung mit der Umgebung verbunden sein.

Der Zylinderkopf 4 weist eine Zylinderkopfbodenfläche 59 auf, die sich ringförmig um die Sensorsignalbohrung 26 erstreckt. In der Zylinderkopfbodenfläche 59 ist eine Mehrzahl von Strahlablenkungselementen 60 angeordnet ist. Dabei handelt es sich hier um Senkelemente 61, die als voneinander beabstandete kegelförmige Vertiefungen 62 ausgebildet sind. Die Funktion der Strahlablenkungselemente 60 wird unterhalb beschrieben.

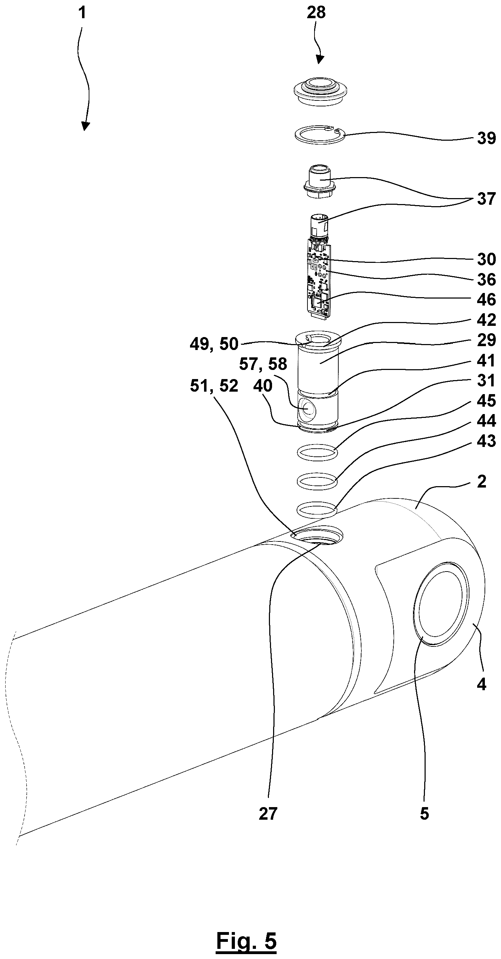

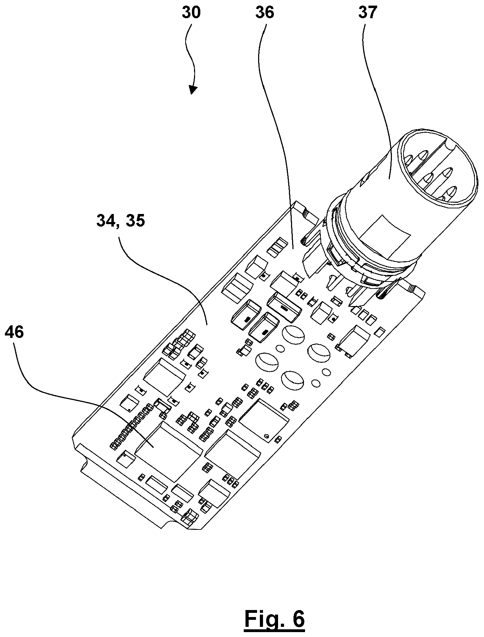

In der Montagebohrung 27 ist eine Kolbenpositionserfassungseinheit 28 angeordnet. Die Kolbenpositionserfassungseinheit 28 dient dazu, mittels Hochfrequenztechnik die axiale Position des Kolbens 7 in dem Zylinder 2 zu erfassen. Die Details der Kolbenpositionserfassungseinheit 28 sind am besten in der vergrößerten Darstellung gemäß Fig. 3 und der Explosionsdarstellung gemäß Fig. 5 zu erkennen. Der Aufbau der elektronischen Baueinheit 30 ist in Fig. 6 genauer dargestellt. Aus Gründen der Übersichtlichkeit wurden die Komponenten der Kolbenpositionserfassungseinheit 28 in den Fig. 1 und 2 nicht mit Bezugszeichen gekennzeichnet.

Die Kolbenpositionserfassungseinheit 28 weist ein Gehäuse 29 und eine in dem Gehäuse 29 angeordnete elektronische Baueinheit 30 auf.

Die Kolbenpositionserfassungseinheit 28 weist einen Kollimator 57 auf, der in diesem Fall das Gehäuse 29 mitbildet. Der Kollimator 57 könnte aber auch in dem Gehäuse 29 oder außerhalb des Gehäuses 29 angeordnet sein. Der Kollimator 57 ist hier als dielektrische Linse 58 ausgebildet. Die Funktion des Kollimators 57 wird unterhalb beschrieben.

Das Gehäuse 29 ist zylindrisch ausgebildet und an seinem unteren Ende (siehe Fig. 5) durch einen Boden 31 geschlossen. Das entgegengesetzte obere Ende ist offen, so dass von dort die elektronische Baueinheit 30 eingesetzt werden kann. Das Gehäuse 29 besteht aus einem Material, das für Hochfrequenzsignale durchlässig ist. Es handelt sich insbesondere um einen thermoplastischen Kunststoff.

Das Gehäuse 29 weist im Bereich seines geschlossenen Bodens 31 ein erstes Ausrichtelement 32 auf, das als Nut 33 ausgebildet und außermittig in dem zylindrischen Gehäuse 29 angeordnet ist. In dieses erste Ausrichtelement 32 greift ein zweites Ausrichtelement 34 der elektronischen Baueinheit 30 ein. Das zweite Ausrichtelement 34 ist als Feder 35 ausgebildet. In dieser Weise wird eine Nut-Feder-Verbindung gebildet. Auch das zweite Ausrichtelement 34 ist außermittig an der elektronischen Baueinheit 30 gebildet. In diesem Beispiel wird die Feder 35 durch eine Platine 36 der elektronischen Baueinheit 30 gebildet. Somit ist die gesamte Platine 36 außermittig angeordnet. Dies könnte aber auch anders realisiert sein.

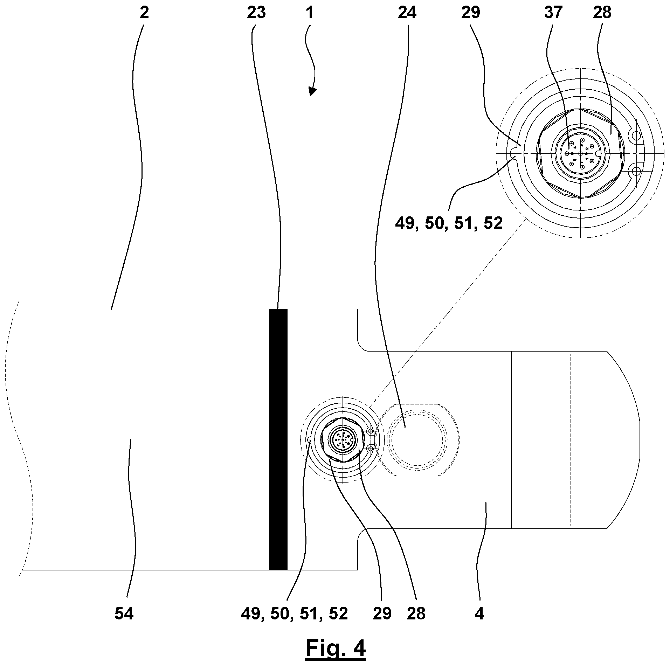

Die korrekte Ausrichtung des Gehäuses 29 in der Montagebohrung 27 wird mittels eines dritten Ausrichtelements 49 realisiert, das hier als Vorsprung 50 an dem Gehäuse 29 ausgebildet ist. Die Montagebohrung 27 weist ein korrespondierendes viertes Ausrichtelement 51 auf, das hier als Ausnehmung 52 ausgebildet ist. Zur besseren Erkennbarkeit ist dieser Bereich in Fig. 4 zusätzlich herausvergrößert dargestellt.

An ihrem gegenüberliegenden axialen Ende ist die Platine 36 mit einem Anschlusselement 37 für die Übertragung von Daten von der elektronischen Baueinheit 30 verbunden. Das Anschlusselement 37 ist in seiner montierten Stellung sowohl mit der elektronischen Baueinheit 30 als auch mit dem Gehäuse 29 verbunden. Die Verbindung zum Gehäuse 29 erfolgt beispielsweise über eine Gewindeverbindung 38. Bei dem Anschlusselement 37 handelt es sich im vorliegenden Fall um einen M12-Stecker. Es könnte sich aber auch um ein anderes Anschlusselement 37 handeln.

Das Gehäuse 30 und somit die Kolbenpositionserfassungseinheit 28 sind mittels eines Sicherungsrings 39 gesichert in der Montagebohrung 27 montiert.

An seinem äußeren Umfang weist das Gehäuse 29 eine erste Nut 40, eine zweite Nut 41 und eine dritte Nut 42 auf. In der ersten Nut 40 ist eine erste Dichtung 43, in der zweiten Nut 41 eine zweite Dichtung 44 und in der dritten Nut 42 eine dritte Dichtung 45 angeordnet. Die erste Dichtung 43 in der ersten Nut 40 dient dabei der Abdichtung gegenüber der Umgebung.

Die Dichtungen 44, 45 hingegen bilden ein Dichtungspaar und dienen der Abdichtung des mit Öl 53 gefüllten Innenraums 3 des Zylinders 2. Die Sensorsignalbohrung 26, in der sich Öl 53 befindet, ist dabei in radialer Richtung - d. h. in Richtung der Längsmittelachse 47 - zwischen der ersten Nut 40 und der zweiten Nut 41 angeordnet. Die effektiven Dichtflächen der Dichtungen 44, 45 sind dabei in etwa gleich groß, so dass sich eine kräfteneutrale Anordnung der Kolbenpositionserfassungseinheit 28 in der Montagebohrung 27 ergibt.

Auf der Platine 36 ist eine Reihe von elektronischen Bauteilen angeordnet. Hierzu gehört eine Antenne 46, die zum Senden und Empfangen von Hochfrequenzsignalen durch das Gehäuse 29 hindurch ausgebildet ist. Die anderen Bauteile dienen der Bestimmung, Berechnung, Auswertung und Übermittlung von Daten in der Kolbenpositionserfassungseinheit 28, sind für sich genommen dem Fachmann geläufig und werden daher nicht weiter erläutert.

Die Antenne 46 ist dabei so auf der Platine 36 angeordnet, die Platine 36 so in dem Gehäuse 29 ausgerichtet und das Gehäuse 29 so in dem Zylinderkopf 4 ausgerichtet, dass die Hochfrequenzsignale der Antenne 46 durch die Sensorsignalbohrung 26 gerichtet sind. Der Hauptstrahlrichtungssinn 63 der Antenne 46 verläuft somit senkrecht zu der Längsmittelachse 47 des Gehäuses 29 und parallel zu der Längsmittelachse 54 der Kolben-Zylinder-Einheit 1. Damit erstreckt sich der Hauptstrahlrichtungssinn 63 der Antenne 46 entlang der Längsmittelachse 48 der Sensorsignalbohrung 26 oder derart versetzt dazu, dass die Hochfrequenzsignale von der Antenne 46 durch den Kollimator 57 und die Sensorsignalbohrung 26 auf den Kolben 7 gerichtet und die von diesem reflektierten Signale durch die Antenne 46 empfangen werden können.

Beim Betrieb der Kolbenpositionserfassungseinheit 28 sendet diese mittels der Antenne 46 Hochfrequenzsignale durch den Kollimator 57, das Gehäuse 29, die Sensorsignalbohrung 26 und - je nach Stellung des Kolbens 7 - durch einen Teil des Innenraums 3. Die Signale treffen auf den Kolben 7, werden von diesem reflektiert, gelangen auf demselben Weg zurück und werden von der Antenne 46 empfangen.

Durch den Kollimator 57 wird die Präzision der Kolbenpositionserfassungseinheit 28 in mehrfacher Hinsicht verbessert. Der Kollimator 57 erzeugt einen Strahlengang mit parallelen Strahlen aus zuvor nicht-parallelen Strahlen und umgekehrt. In dem Senderichtungssinn wandelt der Kollimator 57 also die nicht-parallele Strahlen von der Antenne 46 in parallele Strahlen um. In dem entgegengesetzten Empfangsrichtungssinn bündelt der Kollimator 57 die parallel in diesen eintretenden Signale, die vom Kolben 7 reflektiert wurden, und bündelt diese so, dass sie von der Antenne 46 empfangen werden.

Durch die Strahlablenkungselemente 60 wird die Präzision der Kolbenpositionserfassungseinheit 28 weiter verbessert. Die Strahlablenkungselemente 60 lenken bereits mehrfach reflektierte Signale (= Falschsignale) bewusst so ab, dass ihr Winkel stark von der Richtung parallel zu der Längsmittelachse 54 des Kolbens 7 abweicht. Dadurch verlängert sich der Weg der Falschsignale durch das Öl 53 und die Dämpfung der Falschsignale steigt entsprechend an. Letztendlich gelangen diese Falschsignale nicht, nur mit geringer Wahrscheinlichkeit und/oder nur gedämpft auf die Antenne 46.

Die elektronische Baueinheit 30 nimmt mit ihren weiteren elektronischen Bauelementen und dem von diesen ausgeführten Programm eine Auswertung vor und bestimmt somit die momentane Position des Kolbens 7 entlang der Längsmittelachse 54. Diese Bestimmung kann permanent, in definierten Zeitabständen oder zu bestimmten Zeitpunkten durchgeführt werden. Über das Anschlusselement 37 wird das Ergebnis oder ein damit in Verbindung stehender Befehl an eine damit verbundene elektronische Recheneinheit der Arbeitsmaschine weitergegeben, deren Teil die Kolben-Zylinder-Einheit 1 ist.

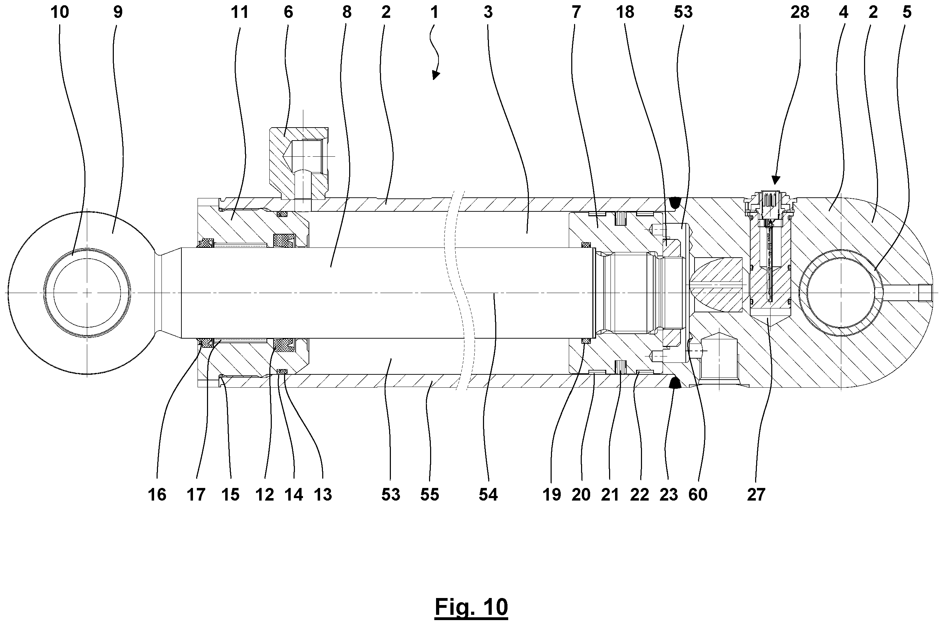

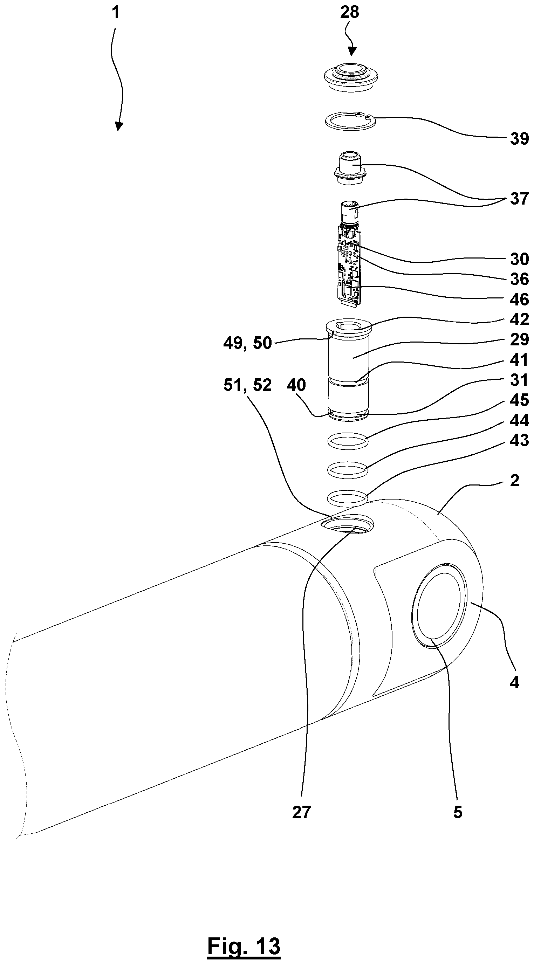

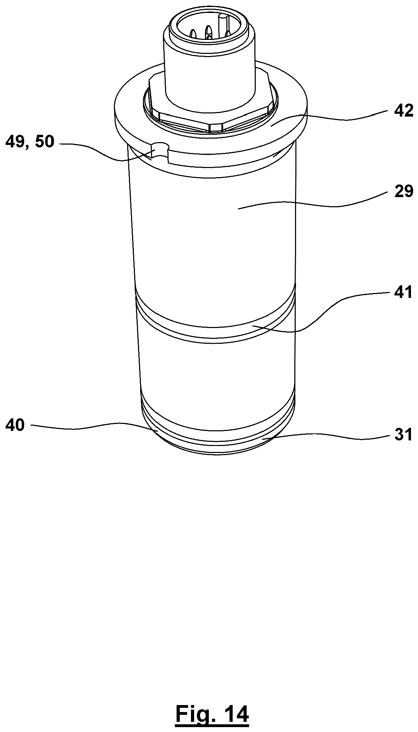

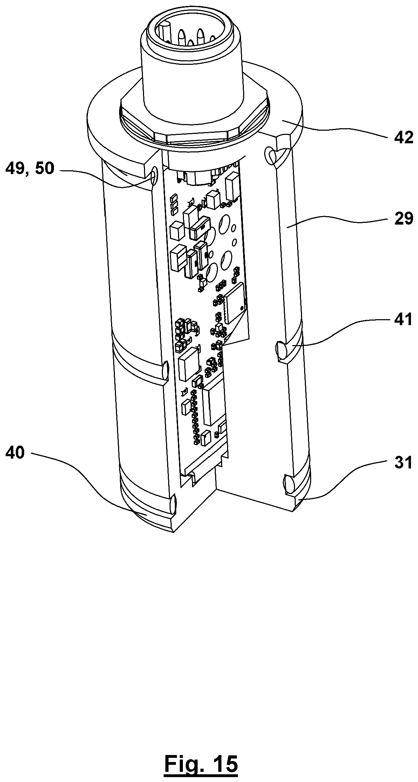

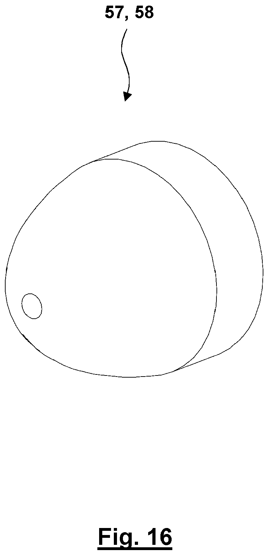

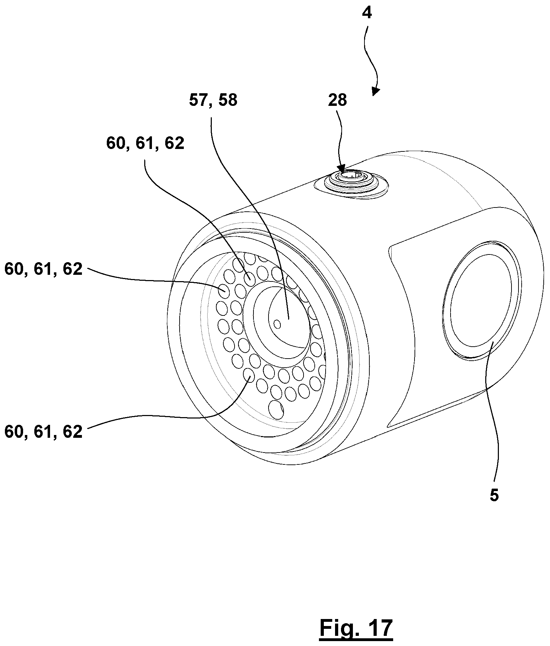

**Fig. 10-17** zeigen verschiedene Ansichten einer zweiten beispielhaften Ausführungsform einer neuen Kolben-Zylinder-Einheit 1 sowie deren Teile. **Fig. 4** **und** **6** gelten auch für diese Ausführungsform. Aufgrund der weitgehenden Übereinstimmungen zwischen der ersten und zweiten beispielhaften Ausführungsform der Kolben-Zylinder-Einheit 1 wird auf die oberhalb angegebenen Ausführungen verwiesen.

Anders ausgebildet sind aber die Kolbenpositionserfassungseinheit 28 und die Sensorsignalbohrung 26. Der Kollimator 57 ist ein separates Bauteil, das in der vergrößerten Sensorsignalbohrung 26 angeordnet ist.

### BEZUGSZEICHENLISTE

- 1: Kolben-Zylinder-Einheit
- 2: Zylinder
- 3: Innenraum
- 4: Zylinderkopf
- 5: Lagerbuchse
- 6: Ölanschluss
- 7: Kolben
- 8: Kolbenstange
- 9: Kolbenstangenauge
- 10: Lagerbuchse
- 11: Führungsbuchse
- 12: Stangendichtung
- 13: O-Ring
- 14: Stützring
- 15: O-Ring
- 16: Abstreifer
- 17: Gleitlager
- 18: Sicherungsmutter
- 19: O-Ring
- 20: Kolbenführungsring
- 21: Kolbendichtung
- 22: Kolbenführungsring
- 23: Schweißnaht
- 24: Ölanschluss
- 25: Kammer
- 26: Sensorsignalbohrung
- 27: Montagebohrung
- 28: Kolbenpositionserfassungseinheit
- 29: Gehäuse
- 30: elektronische Baueinheit
- 31: Boden
- 32: erstes Ausrichtelement
- 33: Nut
- 34: zweites Ausrichtelement
- 35: Feder
- 36: Platine
- 37: Anschlusselement
- 38: Gewindeverbindung
- 39: Sicherungsring
- 40: erste Nut
- 41: zweite Nut
- 42: dritte Nut
- 43: erste Dichtung
- 44: zweite Dichtung
- 45: dritte Dichtung
- 46: Antenne
- 47: Längsmittelachse
- 48: Längsmittelachse
- 49: drittes Ausrichtelement
- 50: Vorsprung
- 51: viertes Ausrichtelement
- 52: Ausnehmung
- 53: Öl
- 54: Längsmittelachse
- 55: Zylinderrohr
- 56: Luft
- 57: Kollimator
- 58: dielektrische Linse
- 59: Zylinderkopfbodenfläche
- 60: Strahlablenkungselement
- 61: Senkelement
- 62: Vertiefung
- 63: Hauptstrahlrichtungssinn

## Patentansprüche

1. Kolben-Zylinder-Einheit (1), mit
einem Zylinder (2) mit einer sich radial in dem Zylinder (2) erstreckenden Montagebohrung (27),
einem in dem Zylinder (2) entlang einer Längsmittelachse (54) axial beweglich gelagerten Kolben (7),
einer Kolbenpositionserfassungseinheit (28), die in der Montagebohrung (27) angeordnet ist und mittels Hochfrequenztechnik die axiale Position des Kolbens (7) in dem Zylinder (2) erfasst, wobei die Kolbenpositionserfassungseinheit (28) eine Antenne (46) zum Senden und Empfangen von Hochfrequenzsignalen aufweist,
einem Kollimator (57), der im Strahlengang der Antenne (46) angeordnet ist, **dadurch gekennzeichnet, dass**
die Antenne (46) einen Hauptstrahlrichtungssinn (63) aufweist, der sich parallel zu der Längsmittelachse (54) erstreckt.

2. Kolben-Zylinder-Einheit (1) nach Anspruch 1, **dadurch gekennzeichnet, dass** der Kollimator (57) eine dielektrische Linse (58) aufweist.

3. Kolben-Zylinder-Einheit (1) nach mindestens einem der vorhergehenden Ansprüche, **dadurch gekennzeichnet, dass** der Kollimator (57) integrierter Bestandteil der Kolbenpositionserfassungseinheit (28) ist.

4. Kolben-Zylinder-Einheit (1) nach mindestens einem der vorhergehenden Ansprüche, **dadurch gekennzeichnet, dass**
der Zylinder (2) ein Zylinderrohr (55) und einen Zylinderkopf (4) aufweist,
die Montagebohrung (27) in dem Zylinderkopf (4) angeordnet ist,
die Kolbenpositionserfassungseinheit (28) derart in der Montagebohrung (27) angeordnet ist, dass sich ihre längste Dimension radial in dem Zylinderkopf (4) erstreckt.

5. Kolben-Zylinder-Einheit (1) nach mindestens einem der vorhergehenden Ansprüche, **dadurch gekennzeichnet, dass** die Montagebohrung (27) über eine sich axial erstreckende Sensorsignalbohrung (26) wirkend mit dem Innenraum (3) des Zylinders (2) verbunden ist.

6. Kolben-Zylinder-Einheit (1) nach Anspruch 4 und 5, **dadurch gekennzeichnet, dass** der Zylinderkopf (4) eine die Sensorsignalbohrung (26) umgebende Zylinderkopfbodenfläche (59) aufweist, in der eine Mehrzahl von Strahlablenkungselementen (60) angeordnet ist.

7. Kolben-Zylinder-Einheit (1) nach Anspruch 6, **dadurch gekennzeichnet, dass** die Strahlablenkungselemente (60) als Senkelemente (61) ausgebildet sind.

8. Kolben-Zylinder-Einheit (1) nach Anspruch 6 oder 7, **dadurch gekennzeichnet, dass** die Strahlablenkungselemente (60) als voneinander beabstandete kegelförmige Vertiefungen (62) in der Zylinderkopfbodenfläche (59) ausgebildet sind.

9. Kolben-Zylinder-Einheit (1) nach mindestens einem der vorhergehenden Ansprüche, **dadurch gekennzeichnet, dass** die Kolbenpositionserfassungseinheit (28) ein Gehäuse (29) und eine in dem Gehäuse (29) angeordnete elektronische Baueinheit (30) aufweist.

10. Kolben-Zylinder-Einheit (1) nach Anspruch 9, **dadurch gekennzeichnet, dass** der Kollimator (57) zumindest teilweise in dem Gehäuse (29) angeordnet ist bzw. das Gehäuse (29) mitbildet.

11. Kolben-Zylinder-Einheit (1) nach Anspruch 9 oder 10, **dadurch gekennzeichnet, dass**
die elektronische Baueinheit (30) die Antenne (46) aufweist und diese zum Senden und Empfangen von Hochfrequenzsignalen durch das Gehäuse (29) hindurch ausgebildet ist,
die Antenne (46) so auf der elektronischen Baueinheit (30) und diese so in dem Gehäuse (29) angeordnet ist, dass die Hochfrequenzsignale durch die Sensorsignalbohrung (26) gerichtet sind.

12. Kolben-Zylinder-Einheit (1) nach mindestens einem Ansprüche 9 bis 11, **dadurch gekennzeichnet, dass** das Gehäuse (29) ein erstes Ausrichtelement (32) und die elektronische Baueinheit (30) ein korrespondierendes zweites Ausrichtelement (34) aufweist, wobei das erste Ausrichtelement (32) und das zweite Ausrichtelement (34) so aufeinander abgestimmt sind, dass die elektronische Baueinheit (30) nur in genau einer Orientierung vollständig in dem Gehäuse (29) montierbar ist.

13. Kolben-Zylinder-Einheit (1) nach Anspruch 12, **dadurch gekennzeichnet, dass** das erste Ausrichtelement (32) als eine außermittig in einem axialen Endbereich des Gehäuses (29) angeordnete Nut (33) und das zweite Ausrichtelement (34) als eine ebenso außermittig in einem korrespondierenden axialen Endbereich der elektronischen Baueinheit (30) gebildete Feder (35) ausgebildet ist.

14. Kolben-Zylinder-Einheit (1) nach mindestens einem der vorhergehenden Ansprüche, **dadurch gekennzeichnet, dass** die Kolbenpositionserfassungseinheit (28) ein Gehäuse (29) und eine in dem Gehäuse (29) angeordnete elektronische Baueinheit (30) aufweist, wobei die Kolbenpositionserfassungseinheit (28) so ausgebildet und in der Montagebohrung (27) angeordnet ist, dass der Innenraum (3) des Zylinders (2) gegenüber der Umgebung der Kolben-Zylinder-Einheit (1) abgedichtet ist und die elektronische Baueinheit (30) ohne Aufhebung der Dichtwirkung aus dem Gehäuse (3) entfernbar und in das Gehäuse (3) einsetzbar ist.

## Claims

1. A piston-cylinder unit (1), with
a cylinder (2) with a mounting bore (27) which extends radially in the cylinder (2),
a piston (7) which can be axially movably mounted in the cylinder (2) along a longitudinal central axis (54)
a piston position sensing unit (28), which is arranged in the mounting bore (27) and which senses the axial position of the piston (7) in the cylinder (2) by means of high-frequency technology, wherein the piston position sensing unit (28) has an antenna (46) for transmitting and receiving high-frequency signals,
a collimator (57) which is arranged in the beam path of the antenna (46),
**characterized in that**
the antenna (46) has a main beam direction (63) which extends parallel to the longitudinal central axis (54).

2. The piston/cylinder unit (1) according to claim 1, **characterized in that** the collimator (57) has a dielectric lens (58).

3. The piston/cylinder unit (1) according to at least one of the preceding claims, **characterized in that** the collimator (57) is an integrated component of the piston position sensing unit (28).

4. The piston/cylinder unit (1) according to at least one of the preceding claims, **characterized in that**
the cylinder (2) has a cylinder tube (55) and a cylinder head (4),
the mounting bore (27) is arranged in the cylinder head (4),
the piston position sensing unit (28) is arranged in the mounting bore (27) in such a way that its longest dimension extends radially in the cylinder head (4).

5. The piston/cylinder unit (1) according to at least one of the preceding claims **characterized in that** the mounting bore (27) is operatively connected to the interior space (3) of the cylinder (2) via an axially extending sensor signal bore (26).

6. The piston/cylinder unit (1) according to claims 4 and 5, **characterized in that** the cylinder head (4) has a cylinder head floor surface (59) which surrounds the sensor signal bore (26) and in which a plurality of beam deflection elements (60) are arranged.

7. The piston/cylinder unit (1) according to claim 6, **characterized in that** the beam deflection elements (60) are designed as depression elements (61).

8. The piston/cylinder unit (1) according to claim 6 or 7, **characterized in that** the beam deflection elements (60) are designed as spaced-apart conical indentations (62) in the cylinder head floor surface (59).

9. The piston/cylinder unit (1) according to at least one of the preceding claims, **characterized in that** the piston position sensing unit (28) has a housing (29) and an electronic assembly (30) arranged in the housing (29).

10. The piston/cylinder unit (1) according to claim 9, **characterized in that** the collimator (57) is at least partially arranged in the housing (29) or contributes to forming the housing (29).

11. The piston/cylinder unit (1) according to claim 9 or 10, **characterized in that**
the electronic assembly (30) has the antenna (46) and this is designed to transmit and receive high-frequency signals through the housing (29),
the antenna (46) is arranged on the electronic assembly (30) and this is arranged in the housing (29) in such a way that the high-frequency signals are directed through the sensor signal bore (26).

12. The piston/cylinder unit (1) according to at least one of claims 9 to 11, **characterized in that** the housing (29) has a first aligning element (32) and the electronic assembly (30) has a corresponding second aligning element (34), wherein the first aligning element (32) and the second aligning element (34) are matched to one another in such a manner that the electronic assembly (30) can only be fully mounted in the housing (29) in exactly one orientation.

13. The piston/cylinder unit (1) according to claim 12, **characterized in that** the first aligning element (32) is designed as a groove (33) arranged off-center in an axial end region of the housing (29) and the second aligning element (34) is designed as a spring (35) likewise formed off-center in a corresponding axial end region of the electronic assembly (30).

14. The piston/cylinder unit (1) according to at least one of the preceding claims, **characterized in that** the piston position sensing unit (28) has a housing (29) and an electronic assembly (30) arranged in the housing (29), wherein the piston position sensing unit (28) is designed and is arranged in the mounting bore (27) in such a way that the interior space (3) of the cylinder (2) is sealed off from the surrounding environment of the piston/cylinder unit (1) and the electronic assembly (30) can be removed from the housing (3) and inserted into the housing (3) without cancelling the sealing effect.

## Revendications

1. Unité piston-cylindre (1), comportant
un cylindre (2) comportant un trou de montage (27) s'étendant radialement dans le cylindre (2),
un piston (7) monté dans le cylindre (2) de manière à pouvoir se déplacer axialement le long d'un axe central longitudinal (54),
une unité de détection de position de piston (28) qui est disposée dans le trou de montage (27) et qui détecte la position axiale du piston (7) dans le cylindre (2) au moyen de la technique haute fréquence, dans laquelle l'unité de détection de position de piston (28) présente une antenne (46) pour l'envoi et la réception de signaux de haute fréquence,
un collimateur (57) qui est disposé dans le trajet de rayonnement de l'antenne (46), **caractérisée en ce que**
l'antenne (46) présente un sens de rayonnement principal (63) qui s'étend parallèlement à l'axe central longitudinal (54).

2. Unité piston-cylindre (1) selon la revendication 1, **caractérisée en ce que** le collimateur (57) présente une lentille diélectrique (58).

3. Unité piston-cylindre (1) selon au moins l'une des revendications précédentes, **caractérisée en ce que** le collimateur (57) fait partie intégrante de l'unité de détection de position de piston (28).

4. Unité piston-cylindre (1) selon au moins l'une des revendications précédentes, **caractérisée en ce que**
le cylindre (2) présente un tube de cylindre (55) et une tête de cylindre (4),
le trou de montage (27) est disposé dans la tête de cylindre (4),
l'unité de détection de position de piston (28) est disposée dans le trou de montage (27) de telle sorte que sa dimension la plus grande s'étend radialement dans la tête de cylindre (4).

5. Unité piston-cylindre (1) selon au moins l'une des revendications précédentes, **caractérisée en ce que** le trou de montage (27) est relié de manière fonctionnelle à l'espace intérieur (3) du cylindre (2) par l'intermédiaire d'un trou pour signaux de capteur (26) s'étendant axialement.

6. Unité piston-cylindre (1) selon les revendications 4 et 5,
**caractérisée en ce que** la tête de cylindre (4) présente une surface de fond de tête de cylindre (59) entourant le trou pour signaux de capteur (26), dans laquelle surface sont disposés une pluralité d'éléments de déviation de rayonnement (60).

7. Unité piston-cylindre (1) selon la revendication 6, **caractérisée en ce que** les éléments de déviation de rayonnement (60) sont conçus sous forme d'éléments abaissés (61).

8. Unité piston-cylindre (1) selon la revendication 6 ou 7,
**caractérisée en ce que** les éléments de déviation de rayonnement (60) sont conçus sous forme de cavités (62) coniques espacées les unes des autres dans la surface de fond de tête de cylindre (59).

9. Unité piston-cylindre (1) selon au moins l'une des revendications précédentes, **caractérisée en ce que** l'unité de détection de position de piston (28) présente un boîtier (29) et une unité modulaire électronique (30) disposée dans le boîtier (29).

10. Unité piston-cylindre (1) selon la revendication 9, **caractérisée en ce que** le collimateur (57) est disposé au moins partiellement dans le boîtier (29) ou forme le boîtier (29).

11. Unité piston-cylindre (1) selon la revendication 9 ou 10,
**caractérisée en ce que**
l'unité modulaire électronique (30) présente l'antenne (46) et ladite antenne est configurée pour envoyer et recevoir des signaux de haute fréquence à travers le boîtier (29),
l'antenne (46) est disposée sur l'unité modulaire électronique (30) et celle-ci est disposée dans le boîtier (29) de telle sorte que les signaux de haute fréquence sont dirigés à travers le trou pour signaux de capteur (26).

12. Unité piston-cylindre (1) selon au moins l'une des revendications 9 à 11, **caractérisée en ce que** le boîtier (29) présente un premier élément d'alignement (32) et l'unité modulaire électronique (30) présente un second élément d'alignement (34) correspondant, dans laquelle le premier élément d'alignement (32) et le second élément d'alignement (34) sont adaptés l'un à l'autre de sorte que l'unité modulaire électronique (30) ne peut être montée complètement dans le boîtier (29) que dans une orientation précise.

13. Unité piston-cylindre (1) selon la revendication 12,
**caractérisée en ce que** le premier élément d'alignement (32) est conçu sous la forme d'une rainure (33) disposée de manière excentrée dans une zone d'extrémité axiale du boîtier (29) et le second élément d'alignement (34) est conçu sous la forme d'un ressort (35) également formé de manière excentrée dans une zone d'extrémité axiale correspondante de l'unité modulaire électronique (30).

14. Unité piston-cylindre (1) selon au moins l'une des revendications précédentes, **caractérisée en ce que** l'unité de détection de position de piston (28) présente un boîtier (29) et une unité modulaire électronique (30) disposée dans le boîtier (29), dans laquelle l'unité de détection de position de piston (28) est conçue et disposée dans le trou de montage (27) de sorte que l'espace intérieur (3) du cylindre (2) est rendu étanche par rapport à l'environnement de l'unité piston-cylindre (1) et que l'unité modulaire électronique (30) peut être retirée du boîtier (3) et insérée dans le boîtier (3) sans supprimer l'effet d'étanchéité.
